# EUROPEAN PATENT APPLICATION

(11) **EP 3 561 722 A1**
(43) Date of publication of application: **30.10.2019**
(21) Application number: 19165414.4
(22) Date of filing: 27.03.2019
(51) Int. Cl.: G06K 9/00, H04N 7/18

(54) **VIDEO IMAGE ANALYSIS APPARATUS AND VIDEO IMAGE ANALYSIS METHOD**

(30) Priority: 24.04.2018 JP 2018083452
(71) Applicant: Toshiba Tec Kabushiki Kaisha, 141-8562 Tokyo (JP)
(72) Inventor: TAKENO, Yuishi, Shinagawa-ku, Tokyo 141-8562 (JP)
(74) Representative: Fédit-Loriot

(57) **Abstract**

In one embodiment, a video image analysis apparatus has a video image interface, and a processor. The processor analyzes an action of a person in a video image inputted by the video image interface. As a result of the analyzing the action of the person, when an action of a person to be monitored is detected from the video image, the processor segments a video image portion including the video image in which the action of the person to be monitored has been detected from the image in a set video image segmentation range, to generate a moving image clip.

## Description

### FIELD

The present invention relates to the field of a video image monitoring technology in general, and embodiments described herein relate in particular to a video image analysis apparatus AND a video image analysis method.

### BACKGROUND

Recently, as a result of labor shortage and so on, stores and so on which introduce a system to provide a service in accordance with an operation of a user oneself have been increasing. For example, in retail stores such as a supermarket, stores which introduce a self POS (Point Of Sale) to perform an account processing of a commodity by an operation of a user are increasing. Since the self POS performs processings from a registration operation of a commodity to a settlement processing thereof by an operation of a user oneself, there is a tendency that injustice is easily generated. In the conventional self POSes, some of them has a scheme called "weight check" to simply detect injustice based on a weight of a commodity, but there is injustice which cannot be detected by the weight check. In order to deal with the injustice which cannot be detected by the weight check, it is thought to monitor injustice in the self POS by a video image which a camera photographs.

However, the conventional video image monitoring system is not practically sufficient in a store installed with a self POS and so on, as a system to detect injustice from a video image which a camera photographs. For example, a method in which a person constantly check a video image which the camera photographs is not practical, because manpower to monitor the video image is required. In addition, a method of performing injustice detection based on video image analysis by a computer has not reached the practically sufficient level in terms of accuracy of injustice detection. Further, in the video image analysis by a computer, it is difficult to make an accuracy of injustice detection 100%, due to the nature of machine learning. If the accuracy of injustice detection is not 100%, there may be a case to miss injustice, or there may be a case to inversely determine a person not performing injustice as a person to perform injustice.

### SUMMARY OF INVENTION

To solve such problem, there is provided a video image analysis apparatus comprising: a video image interface to input a video image which a camera has photographed; a processor which analyzes an action of a person in the video image which the video image interface inputs, and when detecting, as a result of the analysis of the action of the person, an action of a person to be monitored from the video image, segments a video image portion including the video image in which the action of the person to be monitored has been detected from the video image in a set video image segmentation range, to generate a moving image clip; and a communication interface to transmit the moving image clip generated by the processor to an external device.

Preferably, the processor detects an unjust action which a person existing in a store to sell a commodity takes, as the action of the person to be monitored.

Preferably still, the processor classifies the action of the person to be detected as the action of the person to be monitored into a plurality of kinds, and generates the moving image clip in the video image segmentation range set for each classified kind.

Preferably yet, the video image interface acquires the video image from the camera which is set so as to photograph a user in a settlement terminal to perform a settlement processing by an operation of the user oneself.

Suitably, the video image interface acquires the video image from the camera which is set so as to photograph a commodity displayed in a store.

The present invention also concerns a video image analysis method of a video image analysis apparatus comprising: inputting a video image which a camera has photographed by a video image interface; analyzing an action of a person in the inputted video image; when detecting, as a result of the analyzing the action of the person, an action of a person to be monitored from the video image, segmenting a video image portion including the video image in which the action of the person to be monitored has been detected from the video image in a set video image segmentation range, to generate a moving image clip; and transmitting the generated moving image clip to an external device by a communication interface.

Preferably, the analyzing the action of the person includes to detect an unjust action which a person existing in a store to sell a commodity takes, as the action of the person to be monitored.

Preferably still, the generating the moving image clip includes to classify the action of the person to be detected as the action of the person to be monitored into a plurality of kinds, and to generate the moving image clip in the video image segmentation range set for each classified kind.

Preferably yet, the inputting the video image by the video image interface includes to acquire the video image from the camera which is set so as to photograph a user in a settlement terminal to perform a settlement processing by an operation of the user oneself.

Suitably, the inputting the video image by the video image interface includes to acquire the video image from the camera which is set so as to photograph a commodity displayed in a store.

The present invention also relates to a non-transitory computer readable medium storing a program causing a computer to execute the method described above.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram schematically showing a configuration example of a video image monitoring system including a video image analysis apparatus according to an embodiment.
Fig. 2 is a block diagram showing a configuration example of the respective apparatuses in the video image monitoring system according to the embodiment.
Fig. 3 is a flow chart showing an operation example in the video image analysis apparatus according to the embodiment.

### DETAILED DESCRIPTION

According to one embodiment, a video image analysis apparatus has a video image interface, a processor, and a communication interface. The video image interface inputs a video image which a camera has photographed. The processor analyzes an action of a person in the video image which the video image interface inputs. When detecting, as a result of the analysis of the action of the person, an action of a person to be monitored from the video image, the processor segments a video image portion including the video image in which the action of the person to be monitored has been detected from the image in a set video image segmentation range, to generate a moving image clip. The communication interface transmits the moving image clip generated by the processor to an external device.

Hereinafter, the present embodiment will be described with reference to the drawings. In the drawings, the same symbols indicate the same or the similar portions. A video image monitoring system of the present embodiment is a system to monitor an action of a person, and so on, by a video image in a store such as a supermarket, for example. In the present embodiment, the video image monitoring system shall perform monitoring by a video image, in a store installed with a checkout system including a self POS and so on. In addition, the video image monitoring system according to the present embodiment shall be configured in combination with the checkout system.

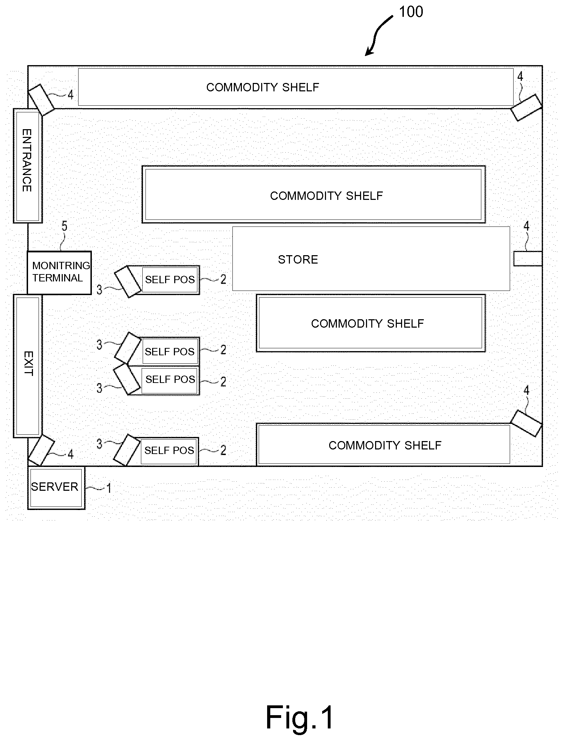

Fig. 1 is a diagram schematically showing a configuration example of a video image monitoring system 100 according to an embodiment. The example shown in Fig. 1 indicates an example of a case in which the video image monitoring system 100 is installed in a store. The video image monitoring system 100 is a system including a server 1, self POSes 2, cameras 3, monitoring cameras 4, a monitoring terminal 5, and so on. The server 1 is a video image analysis apparatus in the video image monitoring system 100. In the present embodiment, the server 1 has a function as a store computer (store server) in a checkout system including the self POSes 2. For example, the server 1 may be a store computer of a checkout system installed with software for functioning as the video image analysis apparatus. However, the video image analysis apparatus and the store computer may be separate servers, respectively.

The server 1 as the video image analysis apparatus has a function to monitor an action of a person by a video image which the monitoring camera 4 or the camera 3 photographs. The server 1 as the video image analysis apparatus segments (extracts) a video image portion to be monitored from the video image which the monitoring camera 4 or the camera 3 photographs, and supplies the segmented video image to the monitoring terminal 5. The server 1 as the store computer has a function to manage information of various kinds in the checkout system. In addition, the server 1 may be installed at any place if it connects to the respective devices for communication, and may be installed in the store, or may be installed outside the store.

The self POS 2 is a settlement terminal for settling a price of a commodity by an operation of a user oneself. The self POS 2 reads commodity specification information from each commodity to be purchased, in response to the operation of the user oneself, and performs an account processing to settle a commodity price based on the read commodity specification information. The self POSes 2 are respectively connected to the cameras 3, and have a communication function with the server 1.

The cameras 3 are installed for the respective self POSes 2. The camera 3 may be a device which the self POS 2 has. In addition, the camera 3 may be installed in the vicinity of the self POS 2 as a separate device from the self POS 2. The camera 3 is installed so as to photograph a user to operate the self POS 2, and so on.

The monitoring camera 4 is a camera for photographing an inside of the store. The monitoring cameras 4 are installed on the ceiling, at the walls, above commodity shelves, and so on in the store. A plurality of the monitoring cameras 4 are installed so that they can photograph the whole inside the store. Each of the monitoring cameras 4 has a function to connect to the server 1, and transmits a photographed video image to the server 1.

The monitoring terminal 5 is a device for a watchman, a manager and so on to monitor a person in the store. For example, the monitoring terminal 5 may be a terminal which an attendant permanently stationed in an area installed with the self POSes manages. In addition, the monitoring terminal 5 may be a terminal or the like which a person in charge of security of the store manages. The monitoring terminal 5 receives the video image data (moving image clip) to be transmitted from the server 1 as the video image analysis apparatus. The monitoring terminal 5 has a display to display the received moving image clip as a video image (monitoring video image) for monitoring a person. The monitoring terminal 5 may be a device which is installed at a fixed position, or may be a portable electronic device which a guardian such as a salesclerk, a guard, or a manager possesses. For example, the monitoring terminal 5 may be a PC (Personal Computer) installed at a place where a watchman, a manager, and so on are permanently stationed. In addition, the monitoring terminal 5 may be a terminal such as a tablet PC, a smartphone, or the like which a guard, a manager, or the like carries.

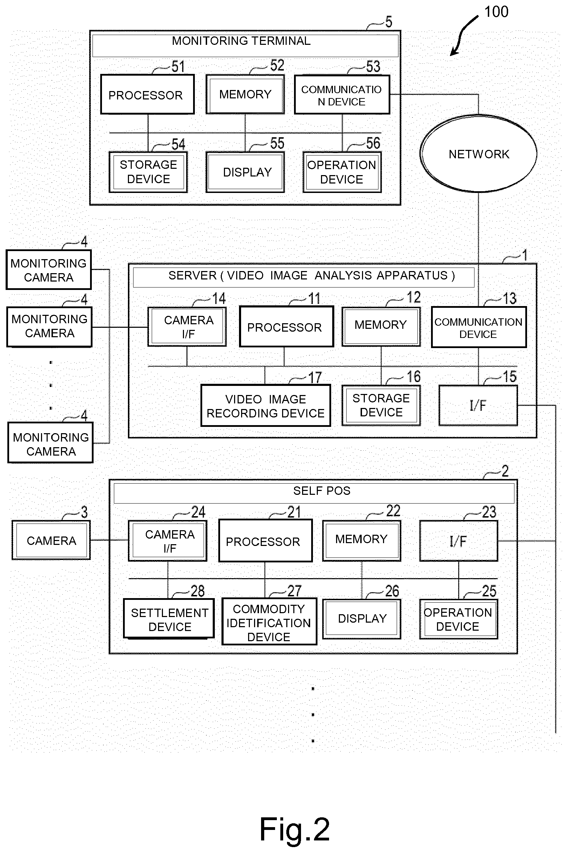

Next, a control configuration of the video image monitoring system 100 according to the embodiment will be described. Fig. 2 is a block diagram showing a control configuration example of the server 1, the self POS 2, and the monitoring terminal 5 in the video image monitoring system 100 according to the embodiment. The server 1 has a processor 11, a memory 12, a communication device 13, a camera I/F (interface) 14, an I/F 15, a storage device 16, and a video image recording device 17. The processor 11 executes a program to realize various processing functions. The memory 12 includes a program memory such as a ROM, a working memory such as a RAM, and so on. The program memory of the memory 12 stores the program to be executed by the processor 11.

The communication device 13 is an interface for communicating with the monitoring terminal 5. The communication device 13 is a communication interface to transmit a moving image clip as a monitoring video image to the monitoring terminal 5. For example, the communication device 13 is also a network interface to communicate with the monitoring terminal 5 via a network. In addition, the communication device 13 may be an interface to communicate with the monitoring terminal 5 via a wide area network outside the store.

The camera I/F 14 is an interface for communicating with the respective monitoring cameras 4. The camera I/F 14 is a video image interface to input a video image from each of the monitoring cameras 4. The camera I/F 14 may be an interface to connect to the monitoring camera 4 via an exclusive cable. In addition, the camera I/F 14 may be an interface to connect to the monitoring camera 4 via radio communication. In addition, the camera I/F 14 may be a LAN interface to connect to a local area network (LAN) inside the store to which the monitoring camera 4 is connected. In addition, the camera 3 may be configured to be connected to the camera I/F 14.

The I/F is an interface for communicating with the self POS 2 in the store. For example, the I/F 15 is a video image interface to input a video image from the camera 3 provided in the self POS 2. For example, the I/F 15 may be a LAN interface for connecting to the respective self POSes 2 for communication, via the LAN inside the store.

The storage device 16 is a rewritable non-volatile memory. For example, the storage device 16 includes a storage unit such as an HDD (Hard Disk Drive) or an SSD (Solid State Drive). The storage device 16 stores a program for making the server 1 function as the store computer and a video image storage device, and management data, and so on. In addition, for example, the storage device 16 stores a program for making the server 1 operate as the video image analysis apparatus described later. In addition, the storage device 16 may store commodity information for making the server 1 function as the store computer, and so on.

The video image recording device 17 is a large-capacity non-volatile memory to record a video image which the monitoring camera 4 or the camera 3 has photographed. The video image recording device 17 includes a rewritable non-volatile storage device such as an HDD or an SSD.

For example, the video image recording device 17 constantly stores a video image which each of the monitoring camera 4 photographs and is to be acquired by the camera I/F 14, along with information of a photographing time and so on. In addition, the video image recording device 17 shall constantly store a video image photographed by the camera 3 installed in the self POS 2, along with information of a photographing time and so on. In addition, the processor 11 arbitrarily accesses to the video image which the video image recording device 17 stores to perform person detection, action detection, and so on. The processor 11 extracts video image data for a desired term from the video image recording device 17, in accordance with the result of the person detection, the action detection, and so on.

In addition, the video image recording device 17 may be an external storage device. For example, the video image recording device 17 may be a storage device which is externally attached to the server 1, or may be a separate server device to be communicatably connected to the server 1. When the video image recording device 17 is the external storage device, the server 1 may have an interface for communicating with the external storage device as the video image recording device 17.

Next, a control configuration example of the self POS 2 will be described. In the configuration example shown in Fig. 2, the self POS 2 has a processor 21, a memory 22, an I/F 23, a camera I/F 24, an operation device 25, a display 26, a commodity identification device 27, and a settlement device 28. The processor 21 executes a program to realize various processing functions. The memory 22 includes a program memory such as a ROM, a working memory such as a RAM, and so on. The program memory of the memory 22 stores the program to be executed by the processor 21. For example, the processor 21 has a function to perform a settlement processing to settle a purchase price, using the settlement device 28. In addition, the processor 21 may execute a function as the video image analysis apparatus described later that is the function of the server 1.

The I/F 23 is an interface for connecting to the server 1 for communication. The I/F 23 is a LAN interface for connecting to the server 1 for communication via the LAN installed inside the store, for example. In addition, when the self POS 2 functions as a video image monitoring apparatus, the I/F 23 communicates with the monitoring terminal 5 as a communication interface.

The camera I/F 24 is an interface for connecting to the camera 3. The camera I/F 24 connects to the camera 3 via an exclusive cable or radio communication, for example. In addition, the camera I/F 24 connects to a LAN to which the camera 3 is connected, as the LAN interface. Further, when the self POS 2 functions as the video image monitoring device, the camera I/F 24 inputs a video image from the camera 3 as a video image interface.

The operation device 25 inputs an operation related to a commodity registration processing and a settlement processing. Specifically, the operation device 25 is an input device which a user operates. The display 26 is a device to display information related to the commodity registration processing and the settlement processing. The display 26 displays information such as a guide to a user to perform the commodity registration processing and the settlement processing. For example, the display 26 displays information such as a commodity name related to a commodity from which the commodity specification information has been read (registered commodity), a settlement amount, and so on. The operation device 25 and the display 26 may be a display device with a touch panel.

The commodity identification device 27 reads commodity specification information from the commodity. The commodity identification device 27 identifies a commodity to be settled based on the read commodity specification information. The commodity identification device 27 is a scanner to read a bar code as the commodity specification information, for example. The settlement device 28 settles a purchase amount (settlement amount) of the commodity. The settlement device 28 includes a casher (cash processor), a card processing unit, and so on, for example.

Next, a control configuration of the monitoring terminal 5 will be described. In the configuration example shown in Fig. 2, the monitoring terminal 5 has a processor 51, a memory 52, a communication device 53, a storage device 54, a display 55, and an operation device 56. The processor 51 executes a program to realize various processing functions. The memory 52 includes a program memory such as a ROM, a working memory such as a RAM, and so on. The program memory of the memory 52 stores the program to be executed by the processor 51.

The communication device 53 is an interface for communicating with the server 1. For example, the communication device 53 is a network interface to communicate with the server 1 via the network. In addition, the communication device 53 may be an interface to communicate with the server 1 via the wide area network outside the store.

The storage device 54 is a rewritable non-volatile memory. For example, the storage device 54 includes a storage unit such as an HDD or an SSD. The storage device 54 stores the moving image clip to be supplied from the server 1, and so on. In addition, the storage device 54 may store a program which is installed so as to be executed by the processor 51, and so on.

The display 55 is a device to display information. For example, the display 55 displays a monitoring video image based on a moving image clip to be generated by the server 1 as the video image analysis apparatus. The operation device 56 is a device to which a guardian such as a salesclerk, a guard or a manager inputs an operation. The operation device 56 is an input device such as a touch panel, a keyboard, and so on. For example, the display 55 and the operation device 56 may be a display device with a touch panel.

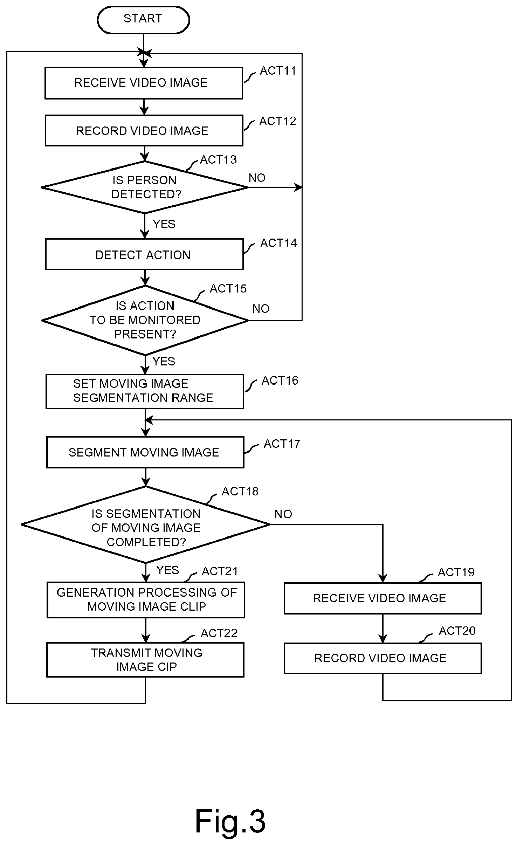

Next, an operation of the video image monitoring system 100 according to the present embodiment will be described. Fig. 3 is a flow chart for describing an operation example of the server 1 as the video image analysis apparatus according to the present embodiment. In ACT11, the camera I/F 14 of the server 1 receives a video image to be photographed by each of the monitoring cameras 4 from each of the monitoring cameras 4. In ACT12, the video image recording device 17 of the server 1 stores the above-described video image by the monitoring camera 4 which has been received by the camera I/F 14, along with information of a photographing time and date, and so on. In addition, in the above-described ACT11, the I/F 15 of the server 1 receives a video image to be photographed by each of the cameras 3 from each of the self POSes 2. In the above-described ACT12, the video image recording device 17 of the server 1 also stores the video image by the camera 3 which has been received by the I/F 15, along with information of a photographing time and date, and so on. That is, the server 1 constantly and continuously executes the processings of the above-described ACT11 and the above-described ACT12 with respect to the video images from the camera 3 and the monitoring camera 4.

The processor 11 of the server 1 executes processings of ACT13 - ACT22 described later to each of the video images to be photographed by the cameras 3 and the monitoring cameras 4. That is, in ACT13, the processor 11 performs person detection to detect whether or not a person exists in each of the video images photographed by the cameras 3 and the monitoring cameras 4. For example, the processor 11 sequentially acquires the respective video images photographed by the cameras 3 and the monitoring cameras 4 at a prescribed period to determine whether or not a person exists in each of the acquired video images.

In the above-described ACT13, when it is detected that a person exists in the video image (ACT13, YES), the processing of the processor 11 proceeds to ACT14. In the above-described ACT13, when it is detected that a person exists in the video image (ACT13, NO), the processing of the processor 11 returns to the ACT11. In ACT14, the processor 11 performs action analysis to analyze an action of the detected person. In ACT15, the processor 11 determines whether or not an action of a person to be monitored is included in the action of the person included in the video image, based on a result of the action analysis. For example, the processor 11 detects an unjust action which a person in the store takes as the action of the person to be monitored. Further, the processor 11 detects a suspicious action, a troublesome action, an action requiring help, a dangerous action or the like which a person in the store takes as the action of the person to be monitored. In addition, the processor 11 may detect not only an action of a customer visiting the store, as the action of the person to be monitored, but also an action of a salesclerk or the like, as the action of the person to be monitored.

The processor 11 detects an unjust action to try to bring an unsettled commodity out the store, as the action of the person to be monitored, for example. The unjust action to try to bring an unsettled commodity out the store includes an action to put an unsettled commodity into a pocket of clothes, or into a bag other than a prescribed basket, or the like, for example. In addition, the processor 11 may detect a suspicious action, as the action to be monitored, for example. The suspicious action includes an action to change a position of a commodity, mischief to a commodity, facilities inside the store, and so on, a suspicious behavior, and so on. In addition, the processor 11 may detect such an action that becomes an annoyance to others, and so on, as the action to be monitored, for example. Further, the processor 11 may detect an action which a lost child takes, and so on, as the action of the person to be monitored, so as to monitor the lost child, for example. Further, the processor 11 may detect an action which a care receiver takes, and so on, as the action of the person to be monitored, so as to monitor the care receiver, and so on, for example.

In addition, the processor 11 may classify the actions of the various persons to be monitored as described above into a plurality of kinds and detect the actions for the respective kinds. In addition, a well-known algorithm can be applied to an algorithm used in a program which the processor 11 executes as the action analysis, so as to detect the action of the person to be monitored. For example, a well-known method as an injustice detection algorithm can be applied to the algorithm to detect an unjust action.

In the above-described ACT15, when the action of the person to be monitored is detected (ACT15, YES), the processing of the processor 11 proceeds to ACT16. In the above-described ACT15, when the action of the person to be monitored is not detected (ACT15, NO), the processing of the processor 11 returns to ACT11. In ACT16, the processor 11 sets a video image segmentation range (moving image segmentation range) for segmenting a video image portion including the video image in which the above-described detected action of the person to be monitored has been detected, from the video image of the above-described detected action of the person to be monitored which has been photographed by the camera 3 and the monitoring camera 4. That is, the processor 11 sets the video image segmentation range for segmenting the video image (monitoring video image) to be monitored by the monitoring terminal 5, from the video image of the above-described detected action of the person to be monitored which has been photographed by the camera 3 and the monitoring camera 4. That is, the processor 11 segments a video image (moving image) in the above-described set video image segmentation range, from the video image of the above-described detected action of the person to be monitored which has been photographed by the camera 3 and the monitoring camera 4, to generate a moving image clip as the monitoring video image. Here, the video image segmentation range may be set in accordance with an operation form and so on. That is, the video image segmentation range is set in accordance with a request of the store side such as a manager to perform monitoring based on the video image.

In addition, the video image segmentation range for segmenting the video image portion as the monitoring video image from the video image by the camera 3 and the monitoring camera 4 is set based on a time point of photographing the video image in which the action of the person to be monitored has been detected. As specific examples, it is thought that the video image segmentation range is set to one of the following ranges (a) - (e).
(a) A range since a person whose action has been detected as the action of the person to be monitored enters a photographing range of the relevant camera until the person leaves the photographing range is set to the video image segmentation range. In this case, the processor 11 continuously performs person detection to the video image of the relevant person photographed by the camera to chase the relevant person. By this means, the processor 11 specifies a time until the relevant person goes outside the photographing range of the camera to determine the video image segmentation range.
(b) A range of a definite time before and after a photographing time when the video image in which the action of the person to be monitored is detected has been photographed is set to the video image segmentation range. In this case, the processor 11 shall segment the video image during a prescribed time period before the photographing time when the video image in which the action of the person to be monitored is detected has been photographed, and the video image which the relevant camera photographs until a prescribed time period elapses after the relevant photographing time.
(c) A range from start to end of a series of actions to be detected as the action of the person to be monitored is set to the video image segmentation range. For example, when the processor 11 detects an unjust action to put a commodity into a pocket, a term while the relevant person takes a series of actions after taking the commodity from a commodity shelf until putting the commodity into the pocket is determined as the video image segmentation range.
(d) An evaluation value (action evaluation value) to evaluate a degree of importance as an object to be monitored is determined to the action of the person to be detected from the video image, and a range in which the action evaluation value exceeds a predetermined threshold value is set to the video image segmentation range. In this case, the processor 11 calculates an action evaluation value to a video image which the camera photographs at a prescribed period, and determines a term in which the calculated action evaluation value exceeds the threshold value as the video image segmentation range.
(e) The action of the person to be monitored detected from the video image is classified for each kind of the action, and a range set individually in accordance with the classified kind of the action is set to the video image segmentation range. For example, when an unjust action such that an unsettled commodity is put into a pocket of clothes of a person in the store is detected, the processor 11 sets an action for the relevant person to take out the commodity from a commodity shelf as a start of the video image segmentation range, and sets a time point when the relevant person leaves by a definite distance from the point where the relevant person has taken the unjust action as an end of the video image segmentation range.

When the video image segmentation range is set in the above-described ACT16, the processing of the processor 11 proceeds to ACT17. In ACT17, the processor 11 executes a segmentation processing to segment video image data (moving image) of the above-described set video image segmentation range from the video image stored in the video image recording device 17. That is, the processor 11 segments the video image portion of the video image segmentation range from the video image by the camera which has photographed the action to be monitored. When the video image of the video image segmentation range is to be segmented from the video image which the video image recording device 17 has stored, the processor 11 judges in ACT18 whether or not segmentation of the whole video image of the above-described set video image segmentation range has been completed.

When the whole video image of the video image segmentation range has been stored in the video image recording device 17, that is, when the whole video image of the video image segmentation range has been acquired, the processor 11 can immediately segment the whole video image of the video image segmentation range from the video image recording device 17. In this case, the processor 11 judges that the segmentation of the video image has been completed (ACT18, YES).

When the whole video image of the video image segmentation range has not been stored in the video image recording device 17, that is, when the whole video image of the video image segmentation range has not been acquired, the processor 11 cannot immediately segment the whole video image of the video image segmentation range. For example, when the video image segmentation range including a video image which the camera will photograph from now is set, a video image not photographed has not been acquired, and accordingly the whole video image of the video image segmentation range is not stored in the video image recording device 17. When the whole video image of the video image segmentation range like this has not been photographed, the processor 11 judges that the segmentation of the video image of the set video image segmentation range has not been completed (ACT18, NO).

When it is judged that the segmentation of the whole video image of the video image segmentation range has not been completed (ACT18, NO), the processing of the processor 11 proceeds to ACT19 and ACT 20.In ACT19 and ACT20, the processor 11 continuously executes a processing to acquire the remaining video image of the video image segmentation range. That is, in ACT19, the processor 11 receives a video image from the relevant camera until the segmentation of the whole video image of the video image segmentation range is completed. In ACT20, the processor 11 records the received video image in the video image recording device 17. When the received video image has been recorded in the video image recording device 17 (ACT20), the processing of the processor 11 returns to the above-described ACT17, and the processor 11 continuously executes the segmentation processing of the video image.

When it is judged in the above-described ACT18 that the segmentation of the whole video image of the video image segmentation range has been completed (ACT18, YES), the processing of the processor 11 proceeds to ACT21. In ACT21, the processor 11 performs a processing to generate a moving image clip from the segmented video image. The moving image clip is generated in a data file of a format which can be displayed by the monitoring terminal 5. In addition, the data format of the moving image clip may be determined in accordance with a communication system with the monitoring terminal 5. When the moving image clip is generated, the processing of the processor 11 proceeds to ACT22. In ACT22, the processor 11 transmits the generated moving image clip to the monitoring terminal 5 by the communication device 13.

In addition, the above-described operation example shown in Fig. 3 may be executed by a computer provided separately from the server 1, or may be executed by the self POS 2. In the case of the latter, the self POS 2 functions as the video image analysis apparatus. For example, the self POS 2 executes the operation shown in Fig. 3 to the video image to be putted from the camera 3. In this case, the self POS 2 generates the moving image clip including the video image to be monitored from the video image photographed by the camera 3 without through the server 1, and transmits the moving image clip to the monitoring terminal 5.

As described above, the video image analysis apparatus according to the present embodiment can be realized as a function and so on which the server or the self POS in the video image monitoring system realizes. The video image analysis apparatus receives the video image of the camera installed in the sales floor of the store or the checkout area (area in which the self POS is installed). The video image analysis apparatus analyzes the action of the person in the received video image, and detects the action of the person to be monitored such as an unjust action. When detecting the action of a person to be monitored, the video image analysis apparatus segments the moving image including the video image in which the action has been photographed in the video image segmentation range to generate the moving image clip, and sends the moving image clip to the monitoring terminal.

By this means, the video image analysis apparatus can provide the monitoring terminal with the moving image clip including the video image indicating "suspicion" such as injustice, based on the action of the person to be monitored which has been detected from the video image photographed by the camera. As a result, the video image analysis apparatus can deliver the video image by the camera to the monitoring terminal, just as the moving image clip including the video image indicating "suspicion", even if the detection accuracy of the action of the person to be monitored such as the unjust action is not 100%. In addition, the video image analysis apparatus transmits the moving image clip which is generated by segmenting the video image including the video image indicating "suspicion" in the set video image segmentation range to the monitoring terminal. For the reason, it becomes unnecessary for a monitoring person such as a manager to constantly monitor the video image, and thereby it is possible to efficiently perform monitoring, and store management can effectively be performed.

In addition, the video image analysis apparatus according to the embodiment can set the video image segmentation range for segmenting the moving image including the video image in which the action of the person to be monitored has been photographed, in accordance with the operation thereof. For example, the video image analysis apparatus according to the embodiment can also generate the moving image clip in a prescribed term, as the video image segmentation range, starting from a time point of photographing the video image in which the action of the person to be monitored has been detected. By this means, according to the embodiment, the moving image can be segmented from the image in the prescribed term starting from the time point when the action of the person to be monitored has been detected, by a simple processing, and thereby the moving image clip can be simply generated.

In addition, the video image analysis apparatus according to the embodiment can also generate the moving image clip from the video image segmented by a video image segmentation range in accordance with an action of an executor of the detected action of the person to be monitored. For example, the video image analysis apparatus may determine a time period while the executor of the detected action of the person to be monitored exists within the photographing range of the camera, as the video image segmentation range. In addition, the video image analysis apparatus can segment the video image from start to end of a series of operations of the detected action of the person to be monitored to generate the moving image clip. By this means, according to the embodiment, it is possible to provide the monitoring terminal with the moving image clip indicating a series of the actions detected as the action of the person to be monitored.

In addition, the video image analysis apparatus according to the embodiment calculates the evaluation value to the action of the person existing in the video image photographed by the camera. And the video image analysis apparatus determines the range in which the calculated evaluation value exceeds the threshold value as the video image segmentation range, and generates the moving image clip in the determined video image segmentation range. By this means, according to the embodiment, it is possible to provide the monitoring terminal with the monitoring video image based on the action of the person arbitrarily detected from the video image.

In addition, the video image analysis apparatus according to the embodiment classifies the action detected as the action of the person to be monitored into a plurality of kinds. And the video image analysis apparatus generates the moving image clip in the video image segmentation range which is set for each classified kind. By this means, according to the embodiment, the moving image clip can be generated from the moving image segmented in accordance with the action content (kind) of the person. As a result, the video image analysis apparatus can provide the monitoring terminal with the monitoring video image based on the action of the person to be arbitrarily detected from the video image to be photographed by the camera.

While certain embodiments have been described, these embodiments have been presented by way of example only, and are not intended to limit the scope of the inventions. Indeed, the novel embodiments described herein may be embodied in a variety of other forms; further, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A video image analysis apparatus comprising:
a video image interface configured to input a video image which a camera has photographed;
a processor configured to;
analyze an action of a person in the video image which the video image interface inputs, and
when detecting, as a result of the analysis of the action of the person, an action of a person to be monitored from the video image, segments a video image portion including the video image in which the action of the person to be monitored has been detected from the video image in a set video image segmentation range, to generate a moving image clip; and
a communication interface configured to transmit the moving image clip generated by the processor to an external device.

2. The video image analysis apparatus according to Claim 1, wherein:
the processor is configured to detect an unjust action which a person existing in a store to sell a commodity takes, as the action of the person to be monitored.

3. The video image analysis apparatus according to Claim 1 or 2, wherein:
the processor is configured to classify the action of the person to be detected as the action of the person to be monitored into a plurality of kinds, and generate the moving image clip in the video image segmentation range set for each classified kind.

4. The video image analysis apparatus according to any one of Claims 1 to 3, wherein:
the video image interface is configured to acquire the video image from the camera which is set so as to photograph a user in a settlement terminal to perform a settlement processing by an operation of the user oneself.

5. The video image analysis apparatus according to any one of Claims 1 to 4, wherein:
the video image interface is configured to acquire the video image from the camera which is set so as to photograph a commodity displayed in a store.

6. A video image analysis method of a video image analysis apparatus comprising:
inputting a video image which a camera has photographed by a video image interface;
analyzing an action of a person in the inputted video image;
when detecting, as a result of the analyzing the action of the person, an action of a person to be monitored from the video image, segmenting a video image portion including the video image in which the action of the person to be monitored has been detected from the video image in a set video image segmentation range, to generate a moving image clip; and
transmitting the generated moving image clip to an external device by a communication interface.

7. The video image analysis method according to Claim 6, wherein:
the analyzing the action of the person includes to detect an unjust action which a person existing in a store to sell a commodity takes, as the action of the person to be monitored.

8. The video image analysis method according to Claim 6 or 7, wherein:
the generating the moving image clip includes to classify the action of the person to be detected as the action of the person to be monitored into a plurality of kinds, and to generate the moving image clip in the video image segmentation range set for each classified kind.

9. The video image analysis method according to any one of Claims 6 to 8, wherein:
the inputting the video image by the video image interface includes to acquire the video image from the camera which is set so as to photograph a user in a settlement terminal to perform a settlement processing by an operation of the user oneself.

10. The video image analysis method according to any one of Claims 6 to 9, wherein:
the inputting the video image by the video image interface includes to acquire the video image from the camera which is set so as to photograph a commodity displayed in a store.

11. A non-transitory computer readable medium storing a program causing a computer to execute the method according to any one of claims 6 to 10.
